# EUROPEAN PATENT APPLICATION

(11) **EP 3 370 186 A1**
(43) Date of publication of application: **05.09.2018**
(21) Application number: 16836195.4
(22) Date of filing: 21.01.2016
(51) Int. Cl.: G06K 9/00

(54) **FINGERPRINT RECOGNITION SYSTEM**

(30) Priority: 28.10.2015 CN 201510713745
(71) Applicant: Shenzhen Goodix Technology Co., Ltd., Futian Free Trade Zone Shenzhen, Guangdong 518000 (CN)
(72) Inventor: CHAO, Kuohao, Shenzhen Guangdong 518000 (CN); YANG, Mengta, Shenzhen Guangdong 518000 (CN)
(74) Representative: Valea AB
(86) International application number: PCT/CN2016/071678
(87) International publication number: WO 2017/071129

(57) **Abstract**

The present invention provides a fingerprint identification system. The fingerprint identification system includes: a plurality of top-layer electrodes; and a plurality of pixel circuits, respectively connected to the plurality of top-layer electrodes; wherein in a first duration, at least one first top-layer electrodes of the plurality of top-layer electrodes is configured to receive at least one first coding signal, and at least one second top-layer electrodes, adjacent to the at least one first top-layer electrode, of the plurality of top-layer electrodes is configured to receive at least one second coding signal; and wherein the at least one second coding signal and the at least one first coding signal have at least one identical feature. The fingerprint identification system according to the present invention has the advantage of high fingerprint identification precision.

## Description

### TECHNICAL FIELD

The present invention relates to a fingerprint identification system, and in particular, relates to a fingerprint identification system with concentrated power lines.

### BACKGROUND

With the development of science and technology, more and more portable electronic devices such as mobile phones, digital cameras, tablet computers, laptop computers and the like have become indispensable in people's life. Since the portable electronic devices are generally used by individuals and store some private data, the data stored in the electronic device, such as address books, pictures, personal information and the like, is privately owned. If an electronic device is lost, the data therein may be used by others, which may cause unnecessary losses. An electronic device may be prevented from being used by others by means of password protection. However, a password is easily leaked or cracked. Therefore, data security is low. In addition, users may use an electronic device only when inputting a correct password. If the password is forgotten, much inconvenience may be caused to the users. Therefore, a personal fingerprint identification system has been currently developed for identity authentication to improve data security.

In view of the above, how to improve precision of fingerprint identification is one of the objects strived in the industry.

### SUMMARY

A technical problem to be solved by the present invention is to provide a fingerprint identification system to improve precision of fingerprint identification.

To solve the above technical problem, the present invention provides a fingerprint identification system. The fingerprint identification system includes: a plurality of top-layer electrodes; and a plurality of pixel circuits, respectively connected to the plurality of top-layer electrodes; wherein in a first duration, at least one first top-layer electrodes of the plurality of top-layer electrodes is configured to receive at least one first coding signal, and at least one second top-layer electrode of the plurality of top-layer electrodes is configured to receive at least one second coding signal, where in the at least one second top-layer electrode is adjacent to the at least one first top-layer electrode; and wherein the at least one second coding signal and the at least one first coding signal have at least one identical feature.

Preferably, the feature is a waveform of the at least one first coding signal and the at least one second coding signal.

Preferably, the feature is a frequency and phase of the at least one first coding signal and the at least one second coding signal.

Preferably, the feature is a maximum voltage and a minimum voltage of the at least one first coding signal and the at least one second coding signal.

Preferably, the at least one first coding signal is generated by at least one first pixel circuit of the plurality of pixel circuits; and the at least one second coding signal is generated by at least one second pixel circuit of the plurality of pixel circuits;
Wherein the at least one first pixel circuit connects to the at least one first top-layer electrode and the at least one second pixel circuit connects to the at least one second top-layer electrodes.

Preferably, the fingerprint identification system further includes a plurality of coding signal generators, connecting to the plurality of top-layer electrodes; wherein at least one first coding signal generator of the plurality of coding signal generators is configured to generate the at least one first coding signal, and at least one second coding signal generator of the plurality of coding signal generators is configured to generate the at least one second coding signal.

Preferably, the fingerprint identification system further includes a coding signal generator, configured to generate the at least one first coding signal and the at least one second coding signal.

Preferably, the plurality of top-layer electrodes are configured to receive a contact of a finger, and the first duration is a duration when the fingerprint identification system detects that a first contact capacitance formed between the at least one first top-layer electrode and the finger according to a sequence.

In the fingerprint identification system according to the present invention, a coding signal is applied to both a first top-layer electrode (a top-layer electrode to be tested) and a plurality of adjacent second top-layer electrodes, and at least one second coding signal and the first coding signal have an identical feature. In this way, the power lines in the vicinity of the first top-layer electrode are concentrated in a direction of the first top-layer electrode relative to the finger, and thus precision of fingerprint identification is further enhanced.

### BRIEF DESCRIPTION OF THE DRAWINGS

FIG. 1 is a schematic diagram of a fingerprint identification system in the prior art;
FIG. 2 is a schematic diagram of a fingerprint identification system according to an embodiment of the present invention; and
FIG. 3 is a schematic diagram of a fingerprint identification system according to an embodiment of the present invention.

### DETAILED DESCRIPTION

In order to make the objectives, technical solutions, and advantages of the present invention clearer, the present invention is further described in detail below by reference to the embodiments and the accompanying drawings. It should be understood that the embodiments described here are only exemplary ones for illustrating the present invention, and are not intended to limit the present invention.

Generally, a fingerprint identification system includes a plurality of top-layer electrodes arranged to an array, and a plurality of pixel circuits connected to the plurality of top-layer electrodes. The plurality of top-layer electrodes are configured to receive a contact of a finger, and a plurality of contact capacitances are formed between the plurality of top-layer electrodes and the finger. The fingerprint identification system detects the contact capacitances formed between various top-layer electrodes and the finger according to a specific sequence. In the prior art, when the fingerprint identification system detects a first contact capacitance corresponding to a first top-layer electrode of the plurality of top-layer electrodes according to the specific sequence, the fingerprint identification system provides a coding signal only for the first top-layer electrodes, instead of providing any signal to the other top-layer electrodes adjacent to the first top-layer electrode. In other words, the other top-layer electrodes may be in a float-connected state or may be electrically connected to a direct current voltage. In this case, when the fingerprint identification system detects the first contact capacitance corresponding to the first top-layer electrode of the plurality of top-layer electrodes according to the specific sequence, the power lines formed at the first top-layer electrode may be distributed to the other top-layer electrodes adjacent to the first top-layer electrode. As a result, the fingerprint identification system detects that a detected capacitance of the first contact capacitance is less than the actual capacitance value, which even lowers the precision of fingerprint identification.

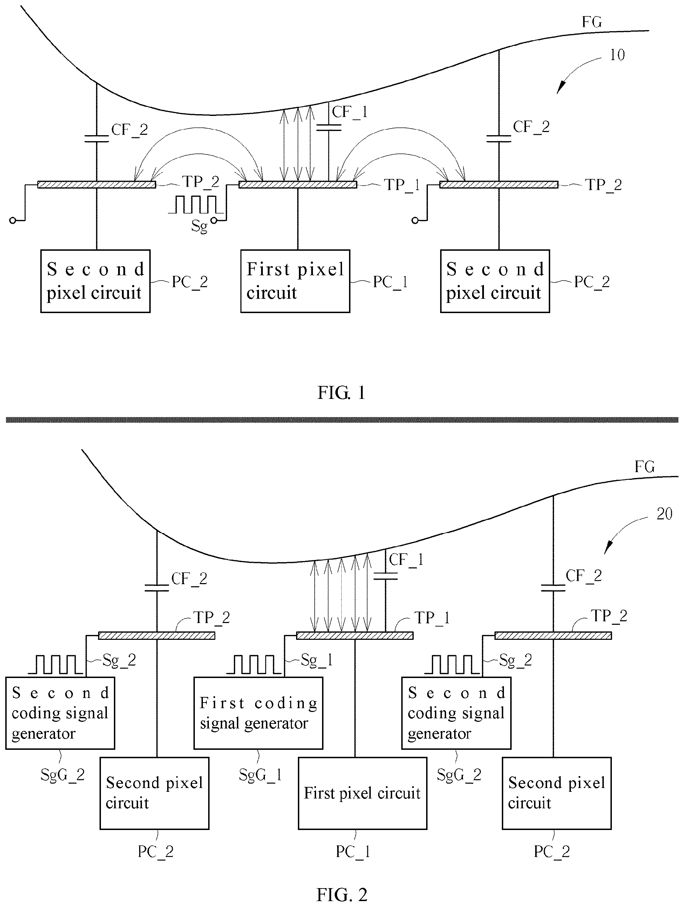

Referring to FIG. 1, FIG. 1 is a schematic diagram of a fingerprint identification system 10. As illustrated in FIG. 1, the fingerprint identification system 10 includes a first top-layer electrode TP_1, a plurality of second top-layer electrodes TP_2, a first pixel circuit PC_1 and a plurality of second pixel circuits PC_2. The first top-layer electrode TP_1 and the second top-layer electrodes TP_2 are configured to receive a contact of a finger FG; and a first contact capacitance is formed between the first top-layer electrode TP_1 and the finger FG, and a plurality of second contact capacitances CF_2 are formed between the second top-layer electrodes TP_2 and the finger FG. The first pixel circuit PC_1 and the plurality of second pixel circuits PC_2 are respectively connected to the first top-layer electrode TP_1 and the plurality of second top-layer electrodes TP_2, and are respectively configured to detect the first contact capacitance CF_1 and the second contact capacitances CF_2, wherein the plurality of second top-layer electrodes TP_2 are adjacent to the first top-layer electrode TP_1. When the fingerprint identification system detects the contact capacitance CF_1 between the first top-layer electrode TP_1 and the finger FG, only the first top-layer electrode TP_1 receives a coding signal Sg, and the plurality of second top-layer electrodes TP 2 adjacent to the first top-layer electrodes TP_1 are in a float-connected state or electrically connected to a fixed voltage. In this case, the power lines in the vicinity of the first top-layer electrode TP_1 may be distributed to the plurality of second top-layer electrodes TP 2 adjacent to the first top-layer electrode TP_1.

To be specific, FIG. 1 also illustrates distribution of the power lines in the vicinity of the first top-layer electrode TP_1 when the fingerprint identification system 10 detects the first top-layer electrode TP_1 according to a sequence. As illustrated in FIG. 1, when the fingerprint identification system 10 detects the contact capacitance CF_1 between the first top-layer electrode TP_1 and the finger FG according to a sequence, the power lines in the vicinity of the first top-layer electrode TP_1 may be distributed to the plurality of second top-layer electrodes TP 2 adjacent to the first top-layer electrode TP_1. As a result, the fingerprint identification system 10 detects that a detected capacitance value of the contact capacitance CF_1 is less than the actual capacitance value of the contact capacitance CF_1, and thus the precision of fingerprint identification is lowered.

To solve the problem that the precision is lowered because the power lines are sparsely dispersed, in the present invention, a coding signal is applied to the first top-layer electrode TP_1 and the plurality of second top-layer electrode TP_2 adjacent to the first top-layer electrode TP_1. Referring to FIG. 2, FIG. 2 is a schematic diagram of a fingerprint identification system 20 according to an embodiment of the present invention. Similar to the fingerprint identification system 10, the fingerprint identification system 20 includes a first top-layer electrode TP_1, a plurality of second top-layer electrodes TP_2, a first pixel circuit PC_1 and a plurality of second pixel circuits PC_2. Different from the fingerprint identification system 10, the fingerprint identification system 20 additionally includes a first coding signal generator SgG_1 and a plurality of second coding signal generator SgG 2. When the fingerprint identification system 10 detects a contact capacitance CF_1 between the first top-layer electrode TP_1 and a finger FG according to a sequence, the first coding signal generator SgG_1 generates a first coding signal Sg_1 to the first top-layer electrode TP_1, and meanwhile the plurality of second coding signal generators SgG 2 generate a plurality of second coding signals Sg_2 to the second top-layer electrodes TP_2. In this case, the power lines in the vicinity of the first top-layer electrode TP_1 are relatively concentrated.

To be specific, FIG. 2 illustrates distribution of the power lines in the vicinity of the first top-layer electrode TP_1 in a first duration, wherein the first duration is a duration within which the fingerprint identification system 20 detects the first contact capacitance formed between the first top-layer electrode TP_1 and the finger FG according to a sequence. As illustrated in FIG. 2, in the first duration, the power lines in the vicinity of the first top-layer electrode TP_1 are concentrated towards a specific direction, wherein the specific direction is the direction of the first top-layer electrode TP_1 relative to the finger FG. The power lines in the vicinity of the first top-layer electrode TP_1 may not be dispersed to the second top-layer electrodes TP_2 adjacent to the first top-layer electrode TP_1. In this case, a detected capacitance value of the contact capacitance detected by the fingerprint identification system 20 approaches the actual capacitance value of the contact capacitance CF_1, thereby improving the precision of fingerprint identification.

Preferably, the first coding signal Sg_1 and the plurality of second coding signals Sg 2 are the same signals. In other words, the first coding signal Sg_1 and the plurality of second coding signals Sg 2 have the same signal waveform, signal frequency, signal phase, maximum voltage and minimum voltage, which are not limited herein. The requirements of the present invention are accommodated as long as the first coding signal Sg_1 and the plurality of second coding signals Sg_2 have at least one feature (the signal feature may be one of the signal waveform, signal frequency, signal phase, maximum voltage and minimum voltage, or any combination of the signal waveform, signal frequency, signal phase, maximum voltage and minimum voltage).

As known from the above description, in the present invention, a coding signal is simultaneously applied to the first top-layer electrode (a to-be-detected top-layer electrode) and the plurality of second top-layer electrodes adjacent thereto, such that the power lines in the vicinity of the first top-layer electrode are concentrated towards the direction of the first top-layer electrode relative to the finger, thereby improving the precision of fingerprint identification.

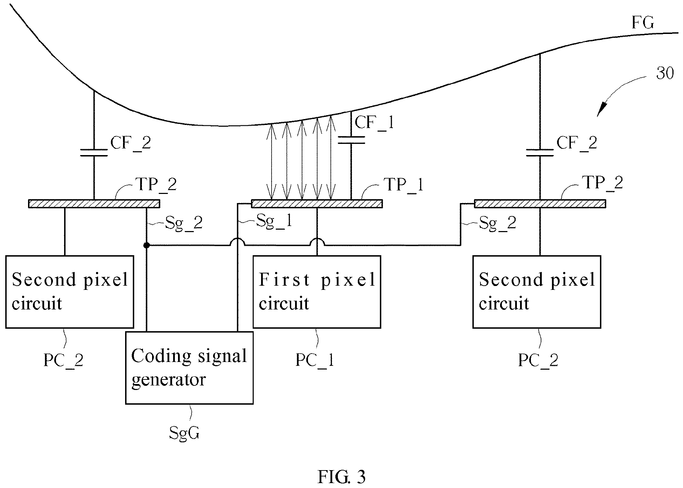

It should be noted that the preceding embodiments are used to describe the concepts of the present invention. A person skilled in the art may make different modifications or polishments to the present invention without any limitation to the above given embodiments. For example, in the fingerprint identification system 20, the first coding signal Sg_1 and the plurality of second coding signals Sg 2 are respectively generated by the first coding signal generator SgG_1 and the plurality of second coding signal generator SgG_2, which are not limited herein. For example, referring to FIG. 3, FIG. 3 is a schematic diagram of a fingerprint identification system 30. The fingerprint identification system 30 is similar to the fingerprint identification system 20. Therefore, like reference numerals are still used to denote like components. Different from the fingerprint identification system 20, the fingerprint identification system 30 only includes a single coding signal generator SgG, the coding signal generator SgG may simultaneously generate the first coding signal Sg_1 and the plurality of second coding signals Sg 2, and respectively input the first coding signal Sg_1 and the plurality of second coding signals Sg 2 to the first top-layer electrode TP_1 and the plurality of second top-layer electrodes TP_2 adjacent thereto. In addition, the first coding signal Sg_1 and the plurality of second coding signals Sg 2 may also be generated by the first pixel circuit PC_1 and the plurality of second pixel circuits PC_2, which are not limited herein. Further, in the above described embodiment, a coding signal is simultaneously applied to the first top-layer electrode and the plurality of second top-layer electrodes adjacent thereto. Non-limitedly, in the fingerprint identification system, a coding signal may be simultaneously applied to the first top-layer electrode (the to-be-detected top-layer electrode) and another top-layer electrode adjacent to the to-be-detected top-layer electrode, which also falls within the protection scope of the present invention. Moreover, in the actual circuit, the coding signal generator and the pixel circuit may share a part of the circuit components, which also falls within the protection scope of the present invention.

In another aspect, in the above described embodiment, the fingerprint identification system only detects a first contact capacitance of a single first top-layer electrode. Non-limitedly, the fingerprint identification system may simultaneously detect first contact capacitances of the plurality of first top-layer electrodes in a first duration, that is, the plurality of first top-layer electrodes receive a first coding signal in the first duration, and the plurality of second top-layer electrodes adjacent to the plurality of first top-layer electrodes also receive a plurality of second coding signals. The plurality of first coding signals and the plurality of second coding signals may have the same signal waveform, signal frequency, signal phase, maximum voltage and minimum voltage, which also falls within the category of the present invention.

In conclusion, in the present invention, a coding signal is simultaneously applied to the first top-layer electrode (a to-be-detected top-layer electrode) and the plurality of second top-layer electrodes adjacent thereto, such that the power lines in the vicinity of the first top-layer electrode are concentrated towards the direction of the first top-layer electrode relative to the finger, thereby improving the precision of fingerprint identification.

The above described embodiments are merely preferred embodiments of the present invention, but are not intended to limit the present invention. Any modification, equivalent replacement, and improvement made without departing from the spirit and principle of the present invention shall fall within the protection scope of the present invention.

## Claims

1. A fingerprint identification system, comprising:
a plurality of top-layer electrodes; and
a plurality of pixel circuits, respectively connected to the plurality of top-layer electrodes;
wherein in a first duration, at least one first top-layer electrodes of the plurality of top-layer electrodes is configured to receive at least one first coding signal, and at least one second top-layer electrode of the plurality of top-layer electrodes is configured to receive at least one second coding signal, where in the at least one second top-layer electrode is adjacent to the at least one first top-layer electrode; and
wherein the at least one second coding signal and the at least one first coding signal have at least one identical feature.

2. The fingerprint identification system according to claim 1, wherein the feature is a waveform of the at least one first coding signal and the at least one second coding signal.

3. The fingerprint identification system according to claim 1, wherein the feature is a frequency and phase of the at least one first coding signal and the at least one second coding signal.

4. The fingerprint identification system according to claim 1, wherein the feature is a maximum voltage and a minimum voltage of the at least one first coding signal and the at least one second coding signal.

5. The fingerprint identification system according to claim 1, wherein the at least one first coding signal is generated by at least one first pixel circuit of the plurality of pixel circuits; and the at least one second coding signal is generated by at least one second pixel circuit of the plurality of pixel circuits;
Wherein the at least one first pixel circuit connects to the at least one first top-layer electrode and the at least one second pixel circuit connects to the at least one second top-layer electrodes.

6. The fingerprint identification system according to claim 1, further comprising a plurality of coding signal generators, connecting to the plurality of top-layer electrodes; wherein at least one first coding signal generator of the plurality of coding signal generators is configured to generate the at least one first coding signal, and at least one second coding signal generator of the plurality of coding signal generators is configured to generate the at least one second coding signal.

7. The fingerprint identification system according to claim 1, further comprising a coding signal generator configured to generate the at least one first coding signal and the at least one second coding signal.

8. The fingerprint identification system according to claim 1, wherein the plurality of top-layer electrodes are configured to receive a contact of a finger, and the first duration is a duration when the fingerprint identification system detects that a first contact capacitance formed between the at least one first top-layer electrode and the finger according to a sequence.
